# EUROPÄISCHE PATENTSCHRIFT

(11) **EP 3 670 470 B1**
(45) Veröffentlichungstag und Bekanntmachung des Hinweises auf die Patenterteilung: **01.10.2025**
(21) Anmeldenummer: 19186323.2
(22) Anmeldetag: 15.07.2019
(51) Int. Cl.: C04B 26/14, C04B 26/16, B05D 5/00, C04B 111/60

(54) **BESCHICHTUNGSZUSAMMENSETZUNG FÜR BODENBELÄGE**
COATING COMPOSITIONS FOR FLOOR COVERINGS
COMPOSITION DE REVÊTEMENT POUR REVÊTEMENT DE SOL

(30) Priorität: 17.12.2018 DE 102018009794
(43) Veröffentlichungstag der Anmeldung: 24.06.2020
(73) Patentinhaber: STO SE & Co. KGaA, 79780 Stühlingen (DE)
(72) Erfinder: Güntert, Uwe, 79780 Stühlingen (DE); Baindl, Andreas, 78247 Hilzingen (DE); Kraus, Gerhard, 79848 Bonndorf (DE)
(74) Vertreter: Gottschalk, Matthias

(56) Entgegenhaltungen:
- RU-C1- 2 654 759
- DUPONT (TM): "Material Safety Data Sheet-Pure Titanium Dioxide Pigment -Paint Coatings -Dry Grades Product name : DuPont (TM) Ti-Pure Titanium Dioxide Pigment -Paint Coatings -Dry Grades Product Grade/Type : R", 18 December 2013 (2013-12-18), XP055665879, Retrieved from the Internet <URL:https://www.stobec.com/DATA/PRODUIT/1947~v~msds_8643.pdf> [retrieved on 20200206]
- THE CHEMOURS COMPANY: "Product Information Product Description", 1 May 2018 (2018-05-01), XP055665884, Retrieved from the Internet <URL:https://www.tipure.com/en/-/media/files/tipure/tipure-900-product-information.pdf> [retrieved on 20200206]

## Beschreibung

Die Erfindung betrifft, insbesondere zweikomponentige, Beschichtungszusammensetzungen, zur Beschichtung von Bodenflächen in Gebäuden, sowie aus den Zusammensetzungen hergestellte Beschichtungen.

Es ist bekannt, Bodenflächen, beispielsweise aus Beton oder Kunstharz, mit einem Belag in Form einer Beschichtung zu versehen, um eine Vielzahl möglicher Vorteile zu erreichen, die zum Beispiel die Gebrauchseigenschaften, die Haltbarkeit oder das Aussehen der beschichteten Fläche betreffen.

Bekannte Beschichtungen umfassen, je nach den zu erfüllenden Anforderungen, verschiedene Ausgestaltungen, von Einfachschichten bis hin zu recht komplexen mehrschichtigen Beschichtungssystemen. Oft basieren solche Beschichtungen auf Kunstharzen, die reaktionsfähige Komponenten enthalten. Typisch dafür sind Reaktionsharze und Reaktionsharzmassen, die wenigstens ein polymerisationsfähiges Harz, wenigstens einen Härter und ggf. weitere Bestandteile wie Füllstoffe, Pigmente und übliche Additive enthalten. Als Harze können zum Beispiel Epoxidharze, Polyurethanharze, Poly(meth)acrylate, Polyharnstoffe und dgl. verwendet werden.

Die Eigenschaften der Beschichtung können durch Zugabe funktionaler bzw. struktureller Bestandteile beeinflusst und oft verbessert werden. So ist es bereits bekannt, die mechanischen Eigenschaften und/oder die Isolationswirkung der

Beschichtung durch den Zusatz von speziellen Füllstoffen oder Fasern zu verbessern.

Beispielsweise ist die Einbringung von Carbon-, Polymer-, Glas- bzw. Mineralfasern bekannt aus EP 164 30 46 B1 oder DE 10 2011 105 673 A1.

Spezieller werden Beschichtungen zum Schutz vor unerwünschten elektrischen Effekten wie etwa elektrostatischer Auf- und Entladung mit elektrisch leitenden Bestandteilen ausgestattet.

Der Bodenbelag wird durch die Beschichtung elektrisch ableitfähig. Die Beschichtung kann dann mit einer Erdung verbunden werden, die die unerwünschte elektrische Ladung ableitet und unschädlich macht. Solche Bodenbeläge sind in mehreren Normen erfasst, z. B. in DIN EN 61340-4-1, DIN-EN-61340-4-5 und DIN VDE 0100-410. Beispiele solcher Bodenbeläge sind bekannt aus EP 2829581, dergemäß Leitruß oder Graphit in eine Epoxidbeschichtung eingebracht werden. EP 2944162 offenbart ein mehrschichtiges Beschichtungssystem mit einer dünnen leitfähigen Kunstharzschicht, die leitfähige Füllstoffe wie zum Beispiel Kohlenstofffasern enthält.

Beschichtungsmittel, die Carbonfasern und anorganische Füllstoffe enthalten und zur Herstellung von antistatischen Bodenbelägen verwendet werden, sind auch aus RU 2 654 759 C bekannt.

Solche bekannten Beschichtungen enthalten ihre Bestandteile in möglichst homogener Verteilung, um isotrope Eigenschaften der Beschichtung zu erzielen. Die Bestandteile der Beschichtung werden dementsprechend ausgewählt, um diese homogene Verteilung zu erreichen.

Hier setzt die Erfindung an. Sie beruht auf der unerwarteten Erkenntnis, dass es zur Schaffung einer voll funktionsfähigen Beschichtung mit verbesserten Eigenschaften vorteilhaft sein kann, auf isotrope Eigenschaften der Beschichtung zu verzichten und stattdessen bewußt anisotrope Eigenschaften gezielt herbeizuführen.

So kann es bei Verwendung von Fasern in der Beschichtung, zum Beispiel zwecks deren mechanischer Verstärkung, sinnvoll sein, die Fasern in einem oberflächennahen Bereich zu konzentrieren. Umgekehrt kann es zum Beispiel sinnvoll sein, farblich störende funktionale Bestandteile wie Leitruß oder Kupfer im oberflächenfernen, dem Untergrund nahen Bereich der Beschichtung zu konzentrieren, wo sie optisch weniger in Erscheinung treten.

Eine wichtige Aufgabe der Erfindung liegt vor diesem Hintergrund darin, neue Beschichtungszusammensetzungen anzugeben, die die Erzeugung von Beschichtungen auf Bodenflächen von Gebäuden und dgl., mit anisotropen Eigenschaften der Beschichtung ermöglichen.

Eine weitere Aufgabe der Erfindung liegt darin, dies mittels der Bestandteile der Beschichtungszusammensetzung zu erreichen, aus der die Beschichtung gebildet wird.

Eine speziellere Aufgabe der Erfindung liegt in der Bereitstellung einer Beschichtungszusammensetzung, die zur Ausbildung einer elektrisch ableitfähigen Beschichtung mit verbesserten Eigenschaften verwendet werden kann.

Zur Lösung dieser und anderer Aufgaben dienen die Merkmalskombinationen der unabhängigen Patentansprüche.

Vorteilhafte Ausgestaltungen der Erfindung sind in den abhängigen Patentansprüchen definiert.

Erfindungsgemäß werden die Aufgaben der Erfindung durch Ausnutzung der Schwerkrafteinwirkung auf die Beschichtungszusammensetzung erreicht, nachdem die Beschichtungszusammensetzung auf den Untergrund aufgetragen und bevor sie ausgehärtet ist. Die Beschichtungszusammensetzung ist nach dem Auftrag und vor dem Aushärten noch flüssig, so dass schwerere Bestandteile wie Füllstoffe (FS) und Pigmente (PG) absinken und sich in dem unteren, dem Untergrund nahen Bereich der Beschichtung anreichern. Entsprechend kommt es zu einer Anreicherung der leichteren Bestandteile im untergrundfernen Bereich der Beschichtung.

Wegen der Ausnutzung der Schwerkrafteinwirkung eignet sich die Erfindung besonders für etwa senkrecht zur Richtung der Schwerkraft angeordnete Untergründe, besonders Bodenflächen in Gebäuden.

Die Einstellung der gewünschten anisotropen Verteilung der Beschichtungsbestandteile in der Beschichtung wird vorteilhaft durch geeignete Wahl von Größe und Form der Teilchen beeinflußt, aus denen diese Bestandteile bestehen. So wird man für Füllstoffe (FS) bzw. Pigmente (PG), die sich im untergrundnahen Teil der Beschichtung sammeln sollen, eine Form wählen, die das Absinken erleichtert.

Die Teilchengrößen (TG)-Verteilung der FS/PG (Füllstoffe bzw. Pigmente) ist dabei aus den nachstehend genannten Gründen vorzugsweise bimodal.

In der Regel spricht man oft bei Partikelgrößen unter 1 µm von Pigmenten, oberhalb davon von Füllstoffen. Wir verwenden hier generell den Begriff "Füllstoff", mit dem Verständnis, dass ein Füllstoff auch ein Farbträger (also ein Pigment) sein kann. "Pigment" und "Füllstoff" sind daher generell austauschbar, sofern es nicht speziell auf die Farbe ankommt.

Der mindestens eine Füllstoff in der bimodalen TG-Verteilung soll eine mittlere Teilchengröße (d50) von 1µm bis 30µm, besser von 1µm bis 20µm, noch besser von 1µm bis 10µm aufweisen. Die mittlere Teilchengröße (d50) wird ermittelt gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen, -durchmessern und Momenten aus Partikelgrößenverteilungen).

Der mindestens zweite Füllstoff soll dann eine ebenso ermittelte mittlere Teilchengröße (d50) von kleiner 1µm, besser kleiner 0,8µm, noch besser von 0,5µm aufweisen, jedoch nicht kleiner als 0,1µm.

Aufgrund der bimodalen Teilchengrößenverteilung wird die Füllstoff/PigmentSchicht besonders kompakt.

Obwohl sehr feinteilige Füllstoffe und/oder Pigmente eingesetzt werden, ist deren Absinkvermögen ausreichend aufgrund ihrer Kompaktheit. Die Kompaktheit ist in erster Linie abhängig von der Massendichte bzw. Rohdichte sowie der Form und Morphologie der Füllstoffe bzw. Pigmente.

Die Form der Teilchen läßt sich über die Ölzahl der Teilchen definieren.

Die Ölzahl bzw. ihre Ermittlung ist in der DIN EN ISO 787-5 definiert. Demnach entspricht die Ölzahl der Menge Lackleinöl, die zur vollständigen Benetzung einer Füllstoffprobe unter vorgegebenen Bedingungen erforderlich ist. Füllstoffpartikel mit einem ungünstigen (nicht "kompakten") Oberflächen/Volumenverhältnis und/oder einer strukturierten oder porösen Oberfläche haben dementsprechend eine höhere Ölzahl.

Die Ölzahl ist insbesondere abhängig vom Oberflächen/Volumenverhältnis und der Morphologie der Füllstoffpartikel. Hierbei spielen die Form und die Größe der Partikel eine Rolle. Während sich kompakte, runde Formen günstig auf eine niedrige Ölzahl auswirken, führen plättchen- oder stabförmige Füllstoffpartikel zu einer Erhöhung der Ölzahl. Plättchenform weisen beispielsweise die Partikel des vergleichsweise preiswerten Füllstoffs Talkum auf, bei dem es sich um ein Schichtsilikat handelt. Erfindungsgemäß werden vorzugsweise Feinfüllstoffe mit kompakter, runder Teilchenform verwendet, die schneller absinken.

Ferner hat die Oberflächenbeschaffenheit der Füllstoffpartikel Einfluss auf die Ölzahl. Eine strukturierte und/oder poröse Oberfläche führt beispielsweise zu einer Erhöhung der Ölzahl. In Abhängigkeit von der Herstellung, Aufbereitung und/oder Herkunft eines Füllstoffs kann demnach die Ölzahl sehr unterschiedlich sein. Im Umkehrschluss gilt, dass wenn man Füllstoffe mit möglichst geringer Ölzahl einsetzt, diese Partikel ein gutes Oberfläche/Volumenverhältnis haben bzw. relativ "kugelförmig" sind (solange keine porösen Füllstoffe eingesetzt werden.) Wenn alle Füllstoff-Partikel relativ kugelförmig sind, können sie dichter gepackt werden. Werden nun relativ kugelförmige Füllstoff-Partikel unterschiedlicher Größe eingesetzt, dann kann die Dichte der Kugelpackung weiter erhöht werden. Die kleineren Partikel sitzen dann in den Lücken zwischen den größeren Partikeln. Der Festkörpergehalt wird so optimiert.

Auch wird man vorzugsweise Füllstoffe bzw. Pigmente mit möglichst hoher Rohdichte einsetzen, da schwerere Teilchen schneller absinken als leichtere.

In einer bevorzugten Ausführungsform der Erfindung ist die Beschichtungszusammensetzung so formuliert, dass sie zur Erzeugung einer elektrisch leitfähigen Beschichtung verwendet werden kann, welche zur Ableitung statischer Auf- und Entladungen geeignet ist. Im Folgenden wird die Erfindung am Beispiel dieser Beschichtungszusammensetzung näher erläutert (die dabei angegebenen verallgemeinernden Aussagen gelten jedoch auch für andere Ausführungsformen der Erfindung, beispielsweise für solche, bei denen es auf elektrische Leitfähigkeit nicht ankommt).

In dieser Ausführungsform basiert die Beschichtungszusammensetzung auf einem zweikomponentigen Epoxidharz. Es ist anzumerken, dass sich nach dem gleichen Prinzip auch ein- oder vielkomponentige Beschichtungszusammensetzungen realisieren lassen.

Wie einleitend schon dargelegt, sind Beschichtungen auf Kunstharzbasis bekannt, die partikelförmige elektrisch leitende Substanzen wie Leitruß oder Graphit enthalten, um ableitfähige Bodenbeläge zu erzeugen.

Um eine ausreichende elektrische Ableitung im Fußbodenbereich zu erreichen, geht man im Stand der Technik den Umweg über Beschichtungssysteme. Es wird auf dem Untergrund eine erste, stark (ab)leitende Schicht eines Leitlacks oder Leitpaste aufgebracht. Diese enthält sehr viel an leitfähigen Substanzen wie Leitruß oder Kupfer und ist dadurch stark gefärbt. Eine Tönung oder Farbgestaltung ist nicht möglich. In dieser leitfähigen Grundierung wird die Erdung vorgesehen. Die Ableitung der elektrischen Ladungen erfolgt horizontal in der Beschichtungsebene bis zur Erdung.

Auf diese Grundierung werden nun weitere Schichten aufgebracht, die andere Funktionen wie Farbgestaltung und Widerstandsfähigkeit erfüllen. Jedoch müssen diese weiteren Schichten eine ausreichende "Durchtrittsleitfähigkeit" besitzen, d.h. eine ausreichende Leitfähigkeit senkrecht zur Beschichtungsebene. In der Regel haben die Beschichtungen keine Vorzugsrichtung hinsichtlich der Leitfähigkeit, sondern die Leitfähigkeit ist isotrop. Erreicht wird die Leitfähigkeit durch den Zusatz von elektrisch leitenden Additiven wie Leitruß oder Graphit, die homogen im Beschichtungsfilm verteilt sind.

Ein wesentlicher Nachteil beim Einsatz von Leitruß oder Graphit in (ab)-leitfähigen Beschichtungen ist, dass zum Erreichen einer akzeptablen Leitfähigkeit erheblichen Mengen an diesen funktionalen Additiven eingesetzt werden müssen. Geeignete Leitruße / Graphite sind zudem nicht billig. Oft handelt es sich auch um synthetisch herstellte Pigmente, bei denen eine leitfähige Komponente auf ein geeignetes Trägermaterial aufgebracht wird. (Nachfolgend wird zur Einfachheit weiter von Leitruß gesprochen).

Die Verwendung von größeren Mengen Leitruß führt zu einer dunklen Färbung (oft dunkelgrau bis schwarz) der Beschichtung. Die Farbgebung und Tönbarkeit einer solchen Beschichtung ist eingeschränkt bis unmöglich. Der Leitruß ist in der Regel in einer Komponente der zweikomponentigen Beschichtungszusammensetzung homogen dispergiert und durch geeignete Dispergier- und Netzmittel stabilisiert. Auch im aufgebrachten trockenen Beschichtungsfilm ist deshalb der Leitruß homogen über die gesamte Filmdicke verteilt. Das ist in der Regel kein Nachteil, aber im Vergleich führt die Erfindung zu einer wesentlichen Verbesserung der Eigenschaften.

Wesentlich bessere Leitfähigkeiten lassen sich erhalten, wenn statt dieser partikelförmigen Substanzen (wie Leitruß) faserförmige Materialien verwendet werden, die hochgradig elektrisch leitfähig sind. Speziell eignen sich hierfür Carbon Nanotubes (CNT), die kommerziell erhältlich sind. Sie verbinden vorteilhaft eine besonders hohe elektrische Leitfähigkeit mit einer Faserstruktur, die zur mechanischen Festigkeit der Beschichtung wesentlich beiträgt.

Die Erfindung ermöglicht es, die dunklen/schwarzen funktionalen Additive wie Leitruß / Graphite gegen leistungsfähigere leitfähige Additive (CNT) auszutauschen. Die Einsatzmenge wird dabei verringert.

Die Vorteile umfassen Performance-Steigerung, Effizienzsteigerung, Kostenreduzierung, Verbesserung der Tönbarkeit und Farbgestaltung. Die Kombinationsvielfalt mit anderen (funktionalen) Beschichtungen (in einem Beschichtungssystem aus mehreren Schichten) wird erheblich gesteigert.

Ferner können weitere Eigenschaften verbessert werden: anisotrope, mechanische Festigkeiten und Elastizitäten (wegen Anreicherung der Fasern können diese mechanische Eigenschaften parallel und senkrecht zur Beschichtungsebene unterschiedlich sein). Hinzu kommen Material- und Zeitersparnis.

Der Austausch von Leitruß gegen die wesentlich leit- und leistungsfähigeren Carbon-Nanotubes (CNT) gemäß der Erfindung ist jedoch nicht trivial. Die (unpolaren) CNT sind schwer dispergier- und stabilisierbar. In Gegenwart von anderen (polaren) Füllstoffen und Pigmenten in einer Komponente der 2-K-Beschichtungszusammensetzung sind sie mit herkömmlichen Dispergiermitteln (für die Dispergierung der polaren Füllstoffe) nicht dispergier- und stabilisierbar.

Aufgrund der hohen Preise für die CNT sollen zudem nur geringe Mengen an CNT möglichst effizient eingesetzt werden.

Ein sehr wesentlicher Aspekt der Erfindung, der diese Probleme überwinden hilft, ist die schon erwähnte Selbstorganisation einer Struktur (Schicht, Lage) innerhalb des Beschichtungsfilms während der Aushärtungsphase unter Schwerkrafteinwirkung. In bevorzugten Ausführungsformen ist dies die Anreicherung der funktionalen Fasern (z.B. CNT) in einer Schicht. Wegen der - durch die bimodale Teilchengrößenvertreilung beförderten - Kompaktheit der Füllstoff/Pigmentschicht ist das Restvolumen des Beschichtungsfilms, in dem die funktionalen Fasern angereichert werden, verringert. Damit steigt die Konzentration der funktionalen Fasern im Restvolumen. Die Leitfähigkeit des Bodenbelags ist dadurch anisotrop und am stärksten ausgeprägt innerhalb einer "Leitebene" parallel zur Beschichtungsebene. Die Selbstorganisation ist gravitationsgetrieben und funktioniert deshalb nur auf im Westlichen horizontalen Flächen.

Die verarbeitungsfertige Beschichtungszusammensetzung enthält neben funktionalen, elektrisch leitenden Fasern (CNT), die relativ leicht sind, auch kompakte und schwere Füllstoffe und / oder Pigmente.

Ein Grundprinzip der Erfindung ist, dass die schweren und kompakten Füllstoffe / Pigmente nach unten sinken, und sich die leichteren funktionalen Fasern darüber anordnen.

Voraussetzungen dafür sind
- "Schwere" der Füllstoffe/Pigmente:
   Rohdichte größer 4,2 kg/dm³.
- Kompaktheit der Füllstoffe/Pigmente:
   Ölzahl (ISO 787 Teil 5) kleiner/gleich 25 g/100g, bevorzugter kleiner/gleich 20 g/100g, noch bevorzugter kleiner/gleich 15 g/100g.
- "Leichtigkeit" der funktionalen Fasern:
   Rohdichte zwischen 1,0 kg/dm³ und 2,0 kg/dm³, besser zwischen 1,1 kg/dm³ und 1,9 kg/dm³, noch besser zwischen 1,2 kg/dm³ und 1,8 kg/dm³.
- Fasern sind nicht kompakt, sondern sind in mind. einer Raumrichtung erheblich kleiner (kürzer) als in anderen Raumrichtungen. Aufgrund ihrer geometrischen Form sinken die Fasern nicht so schnell ab wie die FS/PG.

Die Dispergierung und Stabilisierung von Füllstoffen, Pigmenten und Fasern ist von entscheidender Wichtigkeit. In herkömmlichen Beschichtungszusammensetzungen wird eine möglichst gute Dispergierung angestrebt, um die Inhaltsstoffe dann im Beschichtungsfilm möglichst gleichmäßig verteilt zu bekommen.

Da die Erfindung solch eine homogene Verteilung der Inhaltsstoffe vermeidet, muss der Einsatz von Netz- und Dispergiermittel dosiert durchgeführt werden. Es sollte nur soviel Dispergiermittel zur Stabilisierung eingesetzt werden, dass die Agglomeration oder Konglomeration der Füllstoffe/Pigmente verhindert wird. Es kann sich also in der verarbeitungsfertigen Beschichtungszusammensetzung relativ schnell ein Bodensatz aus den FS/PG bilden, der aber leicht wieder aufgewirbelt werden können muss. Die Bildung eines solchen Bodensatzes ist ein Indiz dafür, dass die Erfindung funktioniert. Die Zeit für die Bildung des Bodensatzes ist aber nicht festgeschrieben und einheitlich, sondern muss an die Topf- und Verarbeitungszeit angepasst sein. Die hierfür erforderlichen Massnahmen sind dem Fachmann bekannt.

Ferner ist es eigentlich unmöglich, polare Füllstoffe neben unpolaren funktionalen Fasern in einer Beschichtungszusammensetzung zu dispergieren und dauerhaft zu stabilisieren. Man müsste mindestens zwei unterschiedliche Dispergier- und Netzmittel verwenden.

Deshalb ist es vorteilhaft, von einer zweikomponentigen Beschichtungszusammensetzung auszugehen, wobei die FS/PG und die funktionalen Fasern in unterschiedlichen Komponenten eingebracht sind. Dabei werden die FS/PG in die Komponente A (Härter-Komponente) eingearbeitet und die Fasern in die Komponente B (Epoxidharz- oder Isocyanat-Komponente).

Weiter ist es vorteilhaft, dass die Fasern in die Komponente B ohne Dispergierungsmittel eingearbeitet werden, um später Unverträglichkeiten oder ungewollte Wechselwirkungen mit Bestandteilen der Komponente A zu vermeiden.

Die FS/PG müssen schwer und kompakt sein. Deshalb eignen sich besonders gut oxidische, sulfidische und/oder sulfatische Schwermetallverbindungen. "Schwermetalle" im Sinne der Erfindung sind metallische Elemente mit einer Ordnungszahl größer/gleich 21 (Beginn der Nebengruppenelemente). Besonders bevorzugt werden die FS/PG ausgewählt aus der Gruppe umfassend Bariumsulfat, Zinkoxide oder -sulfide, Zinnoxide oder -sulfide, Kupferoxide oder -sulfide, Eisenoxide oder -sulfide, Manganoxide oder -sulfide, Vanadate, Titan- und Zirconiumoxide, besonders bevorzugt in der Rutil-Modifikation.

Die Rohdichte, auch scheinbare oder geometrische Dichte oder Raumgewicht genannt, ist die Dichte eines porösen Festkörpers basierend auf dem Volumen einschließlich der Porenräume.

Die Bestimmung der Rohdichte, der Reindichte und der Porosität erfolgt gemäß DIN EN 1936, Februar 2007 (entspricht der deutschen Fassung EN 1936:2006). Roh- und Reindichten werden vom Anwender meist nicht selbst ermittelt, sondern vom Hersteller angegeben oder sind in Nachschlagewerken tabelliert.

Bei unporösen Füllstoffen/Pigmenten nähert sich die Rohdichte der Reindichte an. Dieser Fall liegt auch bei den erfindungsgemäß bevorzugten, möglichst kompakten FS/PG vor.

Die Ölzahl der FS/PG, die ja Aussagen zur Morphologie der Partikel (Partikelform, Oberflächen/Volumen-Verhältnis, Oberflächenbeschaffenheit, Porosität etc.) zulässt, ist kleiner/gleich 25 g/100g, bevorzugter kleiner/gleich 20 g/100g, noch bevorzugter kleiner/gleich 15 g/100g sein. Je kleiner die Ölzahl und je höher die Dichte, desto kompakter und schwerer sind die FS/PG, und desto günstiger ist ihr Absinkverhalten im noch nicht ausgehärteten Beschichtungsfilm.

Als funktionale Fasern kommen in anderen bevorzugten Ausführungsformen statt oder neben den Carbon-Nano-Tubes auch andere Fasern in Betracht, z. B. Carbon-, Polymer-, Glas- und/oder Mineralfasern, je nachdem welche Funktion man in der Beschichtung anisotrop ausbilden will. Zur Steigerung der elektrischen (Ab- )leitfahigkeit der Beschichtung sind natürlich elektrisch leitfähige Fasern einzusetzen wie herkömmliche Carbonfasern oder Fasern aus leitfähigen Polymeren. Aufgrund ihrer herausragenden Eigenschaften sind Carbon-Nano-Tubes bevorzugt, am bevorzugtesten Single-Wall- Carbon-Nano-Tubes (SWCNT).

Damit die funktionalen Fasern oberhalb der schweren FS/PG angereichert werden (bevorzugt in einer Lage) müssen sie "leicht" sein. Sie sollten eine Rohdichte zwischen 1,0 kg/dm³ und 2,0 kg/dm³, besser zwischen 1,1 kg/dm³ und 1,9 kg/ dm³, noch besser zwischen 1,2 kg/dm³ und 1,8 kg/ dm³ haben. Hier ist es richtig von der Rohdichte zu sprechen, da die funktionalen Fasern u.U. auch Hohlfasern umfassen können.

Die Fasern sind durchschnittlich zwischen 0,1 µm und 1000 µm lang, bevorzugter zwischen 0,5 µm und 100 µm lang, noch bevorzugter zwischen 1,0 µm und 50 µm lang.

Die Faserstärke (Durchmesser der Fasern) beträgt zwischen 0,1 nm und 100 nm, bevorzugter zwischen 0,5 nm und 50 nm, noch bevorzugter zwischen 0,6 nm und 20 nm.

Die erfindungsgemäß bevorzugten CNT haben gemäß Herstellerangabe Durchmesser kleiner 2 nm bei > 1 Mikrometer Länge.

Die Kunstharz-Basis umfasst bevorzugt bekannte Reaktiv-Bindemittel auf Basis Epoxidharz oder Polyurethan. Die Reaktiv-Bindemittel sind bevorzugt mind. zweikomponentig. Der Aushärteprozess startet erst bei Zusammengeben der reaktiven Komponenten. Die Aushärtegeschwindigkeit (und damit die Topfzeit, die Verarbeitungszeit sowie die Zeit bis zur vollständigen Aushartung) kann über das Mischungsverhältnis der reaktiven Komponenten gesteuert werden und liegt in der Routine des Fachmanns.

Bei der Auswahl der Dispergiermitteln kann der Fachmann auf bekannte Mittel zurückgreifen. Die Einsatzmenge sollte "sparsam" erfolgen, ist im Einzelnen jedoch abhängig von der Art des gewählten Dispergiermittels, den Füllstoffen/Pigmenten und den anderen Bestandteilen der Beschichtungszusammensetzung. Diese Auswahl liegt ebenfalls in der Routine des Fachmanns.

Die erfindungsgemäße 2K-Beschichtungszusammensetzung kann lösemittelhaltig sein, bevorzugt ist sie jedoch wässrig. Wasserbasierte Beschichtungszusammensetzungen sind aus ökologischer und toxikologischer Sicht bevorzugt.

In der ausgehärteten erfindungsgemäßen Beschichtung gibt es schwerkraftbedingt mind. zwei unterschiedliche Zonen (Lagen oder Schichten). In einer unteren (untergrundnahen) Zone sind die Füllstoffe und oder Pigmente angereichert. Darüber liegt eine Zone mit den funktionalen Fasern. Diese sind innerhalb dieser Zone oder Schicht so angeordnet, dass sie ein zwei-dimensionales Netzwerk ausbilden, durch das dann die Ableitung der elektrischen Ladungen erfolgen kann. Es wird also eine besonders leitfähige Zone (Lage, Schicht) innerhalb des Beschichtungsfilms geschaffen.

Oberhalb der "Faser-Zone" kann noch eine Zone (Lage, Schicht) anschließen, in der hauptsächlich das Bindemittel und ggf. weitere Inhaltsstoffe wie Farbstoffe etc. vorliegen. Diese weiteren Inhaltsstoffe können Substanzen sein, die beispielsweise noch "leichter" als die Fasern sind und noch mehr Auftrieb haben, oder Substanzen, die gelöst im Bindemittel vorliegen.

Die Grenzen zwischen den einzelnen Zonen oder Lagen oder Schichten sind nicht scharf, sondern fließend. Eine scharfe Abgrenzung ist auch nicht erwünscht, denn dann wäre die Leitfähigkeit senkrecht zur "Leitebene" bzw. Beschichtungsebene sehr gering oder könnte u.U. gegen Null gehen, was nicht vorteilhaft ist. Ein ausschließlicher Transport von elektrischen Leitungen innerhalb der "Leitebene" würde dazu führen, dass genau diese "Leitebene" (mit der Anreicherung mit CNT) mit der Erdung (dünne geerdete Kupfer-Platten oder -Kontakte) verbunden werden muss. In der Praxis könnte dies zu Schwierigkeiten führen. Es ist leichter, den gesamten erfindungsgemäßen Beschichtungsfilm zu erden bzw. die Erdung in den Beschichtungsfilm einzubetten.

Der spezifische Widerstand des Bodenbelags parallel zur Beschichtung ist kleiner als 1,0E+6 Ω*m, bessser kleiner als 1,0E+5 Ω*m, noch besser kleiner als 1,0E+4 Ω*m, am besten kleiner als 1,0E+3 Ω*m. Der spezifische Widerstand senkrecht zum Beschichtungsfilm ist kleiner als 1,0E+11 Ω*m, bessser kleiner als 1,0E+9 Ω*m, noch besser kleiner als 1,0E+7 Ω*m, aber mindestens um den Faktor 10, besser um den Faktor 100, noch besser um den Faktor 1000 größer als der spezifische Widerstand (parallel).

### Ausführungsbeispiel

Eine erfindungsgemäße 2K-Beschichtungszusammensetzung umfasst folgende Komponenten:

| **Komponente A**: | gefüllte Härter-Komponente |
|---|---|
| 35,0 Gew.% | Wasser |
| 18,0 Gew.% | Amin-Härter |
| 41,0 Gew. % | Füllstoffe und/oder Pigmente wie BaSO4 (d50 ~ 4µm) und TiO2 (d50 ~ 0,4µm) |
| 1,0 Gew.% | Dispergier- und Netzmittel |
| 5,0 Gew. % | Additive wie Entschäumer, Oberflächen- und Verlaufsadditive, weitere Buntpigmente, etc. |

| **Komponente B**: | Epoxidharz-Mischung |
|---|---|
| 65,0 Gew. % | Epoxidharz A |
| 23,0 Gew. % | Epoxidharz F |
| 2,0 Gew. % | Carbon-Nano-Tubes |
| 10 Gew. % | Epoxid-Reaktivverdünner |

Das Mischungsverhältnis der Komponente A zur Komponente B beträgt 100 zu 22 Gew.-Teile.

Die Beschichtung wird mit einer Naßschichtstärke von mindestens 40 µm bis 500 µm auf den Untergrund aufgetragen, mindestens jedoch den fünffachen Wert des d50-Werts des größtteiligen Füllstoffs/Pigments, besser den zehnfachen Wert des d50-Werts. Das gewährleistet eine ausreichende "Fallhöhe" und genügend Zeit zur Orientierung und Separation der Partikel und Fasern beim Absinken innerhalb des noch flüssigen Beschichtungsfilms.

Die Auftragung kann bis zu einer Trockenschichtstärke von 0,5 mm erfolgen, besser jedoch maximal 0,3 mm, noch besser maximal 0,1 mm, mindesten jedoch 40 µm.

Die Messungen der spezifischen Widerstände erfolgten mit einem digitalen Hochohmmeter Metriso 2000 und wurden an freien Filmen der Beschichtungen mit einer Trockenschichtstärke von 0,1 mm nach einem Tag und 28 Tagen Trockenzeit unter Normalbedingungen vorgenommen. Bei der Berechnung der spezifischen Widerstände wurden die messgeometrischen Parameter Querschnitt (Fläche) und Abstand der Elektroden einbezogen.

Der spezifische Widerstand der Bodenbeschichtung beträgt innerhalb der "Leitebene" 60 Ω*m (1 d) und 80 Ω*m (28 d), senkrecht zur Beschichtungsebene 3,9E+5 Ω*m (1 d) und 6,4E+5 Ω*m (28 d). Nach den 28 Tagen veränderten sich die spezifischen Widerstände kaum mehr.

Zum Vergleich wurde bei einer entsprechenden kommerziell erhältlichen Ableit-Bodenbeschichtung mit Leitpigmenten ein anisotroper spezifischer Widerstand von 1,1E+5 Ω*m (1 d) und 4,3E+3 Ω*m (28 d) ermittelt.

## Patentansprüche

1. Beschichtungszusammensetzung zur Beschichtung von im Wesentlichen senkrecht zur Schwerkraftrichtung ausgerichteten Bodenflächen, insbesondere Gebäudeoberflächen wie Fußböden, umfassend ein organisches Bindemittel, Füllstoffe und/oder Pigmente und funktionale Fasern,
**dadurch gekennzeichnet, dass**
die Füllstoffe und/oder Pigmente eine Rohdichte gemäss DIN EN 1936 größer 4,2 kg/dm³ und eine Ölzahl gemäss DIN EN ISO 787-5 kleiner/gleich 25g/100g aufweisen und die Rohdichte der funktionalen Fasern zwischen 1,0 kg/dm³ und 2,0 kg/dm³ liegt.

2. Beschichtungszusammensetzung nach Anspruch 1,
**dadurch gekennzeichnet, dass**
das Bindemittel mindestens zweikomponentig ist, wobei sich die Füllstoffe/Pigmente in einer ersten Komponente befinden und die funktionalen Fasern in einer zweiten Komponente befinden.

3. Beschichtungszusammensetzung nach Anspruch 1 oder 2,
**dadurch gekennzeichnet, dass**
das Bindemittel ein Reaktiv-Bindemittel ausgewählt aus Epoxidharzen oder Polyurethanharzen und vorzugsweise ein wässriges 2K-Epoxidharz ist, wobei die Füllstoffe und/oder Pigmente in die Komponente A (Härter-Komponente) und die Fasern in die Komponente B (Epoxidharz- oder Isocyanat-Komponente) eingearbeitet sind.

4. Beschichtungszusammensetzung nach einem der vorstehenden Ansprüche, **dadurch gekennzeichnet, dass**
die Füllstoffe und/oder Pigmente eine Ölzahl kleiner/gleich 20 g/100g, bevorzugt kleiner/gleich 15 g/100g aufweisen.

5. Beschichtungszusammensetzung nach einem der vorstehenden Ansprüche, **dadurch gekennzeichnet, dass**
die Füllstoffe/Pigmente oxidische, sulfidische und/oder sulfatische Schwermetallverbindungen und vorzugsweise
ausgewählt sind aus der Gruppe umfassend Bariumsulfat, Zinkoxide oder - sulfide, Zinnoxide oder -sulfide, Kupferoxide oder -sulfide, Eisenoxide oder -sulfide, Manganoxide oder -sulfide, Vanadate, Titan- und Zirconiumoxide.

6. Beschichtungszusammensetzung nach einem der vorstehenden Ansprüche, **dadurch gekennzeichnet, dass**
die Füllstoffe und/oder Pigmente in einer bimodalen Teilchengrößenverteilung vorliegen, wobei vorzugsweise mindestens ein erster Füllstoff/Pigment in der bimodalen TG-Verteilung eine mittlere Teilchengröße (d50) von 1µm bis 30µm, bevorzugt von 1µm bis 20µm, mehr bevorzugt von 1µm bis 10µm aufweist und mindestens ein zweiter Füllstoff/Pigment eine mittlere Teilchengröße (d50) von kleiner 1µm, besser kleiner 0,8µm, noch besser von 0,5µm, jedoch bevorzugt nicht kleiner als 0,1µm aufweist.

7. Beschichtungszusammensetzung nach einem der vorstehenden Ansprüche, **dadurch gekennzeichnet, dass**
die funktionalen Fasern eine Rohdichte zwischen 1,1 kg/dm³ und 1,9 kg/dm³, mehr bevorzugt zwischen 1,2 kg/dm³ und 1,8 kg/dm³ aufweisen.

8. Beschichtungszusammensetzung nach einem der vorstehenden Ansprüche, **dadurch gekennzeichnet, dass**
die funktionalen Fasern ausgewählt sind aus Carbon-Nano-Tubes (CNT), Carbon-, Polymer-, Glas- und/oder Mineralfasern, vorzugsweise aus elektrisch leitfähigen Fasern wie Carbonfasern, Fasern aus leitfähigen Polymeren und bevorzugt Carbon-Nano-Tubes, am meisten bevorzugt Single-Wall-Carbon-Nano-Tubes (SWCNT).

9. Beschichtungszusammensetzung nach Anspruch 7,
**dadurch gekennzeichnet, dass**
die funktionalen Fasern Carbon-Nano-Tubes (CNT) mit einem Durchmesser zwischen 0,1 nm und 100 nm, bevorzugter zwischen 0,5 nm und 50 nm, noch bevorzugter zwischen 0,6 nm und 20 nm und besonders bevorzugt kleiner 2 nm bei > 1 Mikrometer Länge sind.

10. Beschichtung von im Wesentlichen senkrecht zur Schwerkraftrichtung ausgerichteten Bodenflächen, insbesondere Gebäudeoberflächen wie Fußböden, umfassend ein organisches Bindemittel, Füllstoffe und/oder Pigmente und funktionale Fasern, herstellbar mittels der Beschichtungszusammensetzung nach wenigstens einem der vorstehenden Ansprüche.

## Claims

1. A coating composition for coating floor areas which are orientated substantially perpendicular to the gravitational force direction, in particular surfaces such as flooring in buildings, comprising an organic binder, fillers and/or pigments and functional fibres, **characterized in that** the fillers and/or pigments have a bulk density in accordance with DIN EN 1936 of more than **4.2** kg/dm³ and an oil absorption value in accordance with DIN EN ISO 787-5 of less than or equal to 25 g/100g and the bulk density of the functional fibres is between **1.0** kg/dm³ and 2.0 kg/dm³.

2. The coating composition as claimed in claim 1, **characterized in that** the binder is an at least two- component binder, wherein the fillers/pigments are situated in a first component and the functional fibres are situated in a second component.

3. The coating composition as claimed in claim 1 or claim 2, **characterized in that** the binder is a reactive binder selected from epoxy resins or polyurethane resins and is preferably an aqueous 2K epoxy resin, wherein the fillers and/or pigments are incorporated into the component A (curing component) and the fibres are incorporated into the component B (epoxy resin or isocyanate component).

4. The coating composition as claimed in one of the preceding claims, **characterized in that** the fillers and/or pigments have an oil absorption value of less than or equal to 20 g/100g, preferably less than or equal to 15 g/100g.

5. The coating composition as claimed in one of the preceding claims, **characterized in that** the fillers/pigments are oxide, sulphide and/or sulphate heavy metal compounds and are preferably selected from the group comprising barium sulphate, zinc oxides or sulphides, tin oxides or sulphides, copper oxides or sulphides, iron oxides or sulphides, manganese oxides or sulphides, vanadates, titanium oxides and zirconium oxides.

6. The coating composition as claimed in one of the preceding claims, **characterized in that** the fillers and/or pigments are present in a bimodal particle size distribution, wherein preferably, at least one first filler/pigment in the bimodal PS distribution has a mean particle size (d50) of 1 µm to 30 µm, preferably of 1 µm to 20 µm, more preferably of 1 µm to 10 µm and at least one second filler/pigment has a mean particle size (d50) of less than 1 µm, preferably less than 0.8 µm, more preferably 0.5 µm, but preferably not less than 0.1 µm.

7. The coating composition as claimed in one of the preceding claims, **characterized in that** the functional fibres have a bulk density between 1.1 kg/dm³ and 1.9 kg/dm³, more preferably between 1.2 kg/dm³ and 1.8 kg/dm³.

8. The coating composition as claimed in one of the preceding claims, **characterized in that** the functional fibres are selected from carbon nanotubes (CNT), carbon fibres, polymer fibres, glass fibres and/or mineral fibres, preferably from electrically conductive fibres such as carbon fibre, fibres produced from conductive polymers and preferably carbon nanotubes, most preferably single-walled carbon nanotubes (SWCNT).

9. The coating composition as claimed in claim 7, **characterized in that** the carbon nanotube (CNT) functional fibres have a diameter between 0.1 nm and 100 nm, more preferably between 0.5 nm and 50 nm, yet more preferably between 0.6 nm and 20 nm and particularly preferably less than 2 nm for a length of > 1 micrometre.

10. A coating for floor areas which are orientated substantially perpendicular to the gravitational force direction, in particular surfaces such as flooring in buildings, comprising an organic binder, fillers and/or pigments and functional fibres, which can be produced by means of the coating composition as claimed in at least one of the preceding claims.

## Revendications

1. Composition de revêtement, destinée à revêtir des surfaces de sol orientées sensiblement à la perpendiculaire du sens de la gravité, notamment des surfaces de bâtiments, telles que des planchers, comprenant un agent liant organique, des agents de charge et/ou des pigments et des fibres fonctionnelles, **caractérisée en ce que** les agents de charge et/ou les pigments font preuve d'une masse volumique selon la norme DIN EN 1936 qui est supérieure à 4,2 kg/dm³ et d'un indice d'absorption d'huile selon la norme DIN EN ISO 787-5 inférieur/égal à 25 g/100 g et **en ce que** la masse volumique des fibres fonctionnelles se situe entre 1,0 kg/dm³ et 2,0 kg/dm³.

2. Composition de revêtement selon la revendication 1, **caractérisée en ce que** l'agent liant est au moins un bicomposants, les agents de charge/les pigments se trouvant dans un premier composant et les fibres fonctionnelles se trouvant dans un deuxième composant.

3. Composition de revêtement selon la revendication 1 ou **2, caractérisée en ce que** l'agent liant est un agent liant réactif, sélectionné parmi les résines époxy et les résines de polyuréthane et est de préférence une résine époxy 2K aqueuse, les agents de charge et/ou les pigments étant incorporés dans le composant A (composant durcisseur) et les fibres étant incorporées dans le composant B (composant en résine époxy ou en isocyanate).

4. Composition de revêtement selon l'une quelconque des revendications précédentes, **caractérisée en ce que** les agents de charge et/ou les pigments font preuve d'un indice d'absorption d'huile inférieur/égal à 20 g/100 g, de préférence inférieur/égal à 15 g /100 g.

5. Composition de revêtement selon l'une quelconque des revendications précédentes, **caractérisée en ce que** les agents de charge/les pigments sont des composés métalliques lourds oxydiques, sulfurés et/ou sulfatés et sont sélectionnés de préférence dans le groupe comprenant le sulfate de baryum, les oxydes de zinc ou les sulfures de zinc, les oxydes d'étain ou les sulfures d'étain, les oxydes de fer ou les sulfures de fer, les oxydes de manganèse ou les sulfures de manganèse, les vanadates, les oxydes de titane et les oxydes de zirconium.

6. Composition de revêtement selon l'une quelconque des revendications précédentes, **caractérisée en ce que** les agents de charge et/ou les pigments se présentent dans une distribution bimodale des tailles de particules, de préférence au moins un premier agent de charge/pigment présentant dans la distribution bimodale des tailles de particules une taille moyenne des particules (d50) de 1 µm à 30 µm, de préférence de 1 µm à 20 µm, de manière plus préférentielle, de µm à 10 µm et au moins un deuxième agent de charge/pigment présentant une taille moyenne des particules (d50) inférieure à 1 µm, mieux, inférieure à 0,8 µm, encore mieux, de 0,5 µm, mais de préférence, pas inférieure à 0,1 µm.

7. Composition de revêtement selon l'une quelconque des revendications précédentes, **caractérisée en ce que** les fibres fonctionnelles font preuve d'une masse volumique comprise entre 1,1 kg/dm³ et 1,9 kg/dm³, de manière plus préférentielle, entre 1,2 kg/dm³ et 1,8 kg/dm³.

8. Composition de revêtement selon l'une quelconque des revendications précédentes, **caractérisée en ce que** les fibres fonctionnelles sont sélectionnées parmi les nanotubes de carbone (CNT), les fibres de carbone, les fibres de polymère, les fibres de verre et/ou les fibres minérales, de manière préférentielle, parmi des fibres conductrices d'électricité, telles que des fibres de carbone, des fibres en polymères conducteurs et de préférence des nanotubes de carbone, de manière la plus préférentielle, des nanotubes de carbone à simple feuillet (SWCNT).

9. Composition de revêtement selon la revendication 7, **caractérisée en ce que** les fibres fonctionnelles sont des nanotubes de carbone (CNT) d'un diamètre compris entre 0,1 nm et 100 nm, de manière plus préférentielle, entre 0,5 nm et 50 nm, de manière encore plus préférentielle, entre 0,6 nm et 20 nm et de manière particulièrement préférentielle, inférieur à 2 nm pour une longueur > 1 micromètre.

10. Revêtement de surfaces de sol orientées sensiblement à la perpendiculaire du sens de la gravité, notamment de surfaces de bâtiments telles que des planchers, comprenant un agent liant organique, des agents de charge et/ou des pigments et des fibres fonctionnelles, susceptibles d'être fabriqué au moyen de la composition de revêtement selon au moins l'une quelconque des revendications précédentes.
